# EUROPEAN PATENT APPLICATION

(11) **EP 3 489 778 A1**
(43) Date of publication of application: **29.05.2019**
(21) Application number: 18203443.9
(22) Date of filing: 30.10.2018
(51) Int. Cl.: G05B 19/042

(54) **ACTUATING MECHANISM, CONTROL VALVE AND VALVE CONTROL SYSTEM**

(30) Priority: 23.11.2017 CN 201711184347
(71) Applicant: Siemens Schweiz AG, 8047 Zürich (CH)
(72) Inventor: Lampe, Mattias, Beijing 100102 (CN); Wang, Li, Beijing 100102 (CN); Yuan, Yong, Beijing 102208 (CN)
(74) Representative: Maier, Daniel Oliver

(57) **Abstract**

The present invention comprises an actuating mechanism of a control valve of a valve control system, comprising a drive unit (10), a sensor unit (20), a data processing unit (30) and a communication control unit (40). The drive unit can receive a control signal (S1) and drive a valve rod to rotate. The sensor unit is disposed at the drive unit, and is capable of detecting a driving force applied to the valve rod when the drive unit drives the valve rod to move, and generating a driving force signal (S2). The data processing unit is capable of receiving the driving force signal and performing signal conditioning, and then generating a diagnostic signal (S3). The communication control unit is capable of receiving the control signal and sending the control signal to the drive unit, and is also capable of receiving the diagnostic signal and sending the diagnostic signal to a control center (80). The actuating mechanism is capable of sending, to the control center, data of a driving force applied to the valve rod by an actuating mechanism, in order to diagnose a potential valve fault. The present invention also provides a valve control system and a control valve comprising the actuating mechanism.

## Description

### Technical field

The present invention relates to the technical field of control valves, in particular to an actuating mechanism of a control valve of a valve control system, as well as a valve control system and a control valve having an actuating mechanism.

### Background art

A control valve comprises a valve and an actuating mechanism; the actuating mechanism drives the valve by means of an action. In order to adapt to market demands, the actuating mechanism must generally have a diagnostic function. An existing actuating mechanism can generally only acquire a sensor signal containing action amount data of the actuating mechanism and send this signal to a control center, and the control center carries out a comparison with preset data to diagnose whether the valve has developed a fault, e.g. a valve rod of the valve becoming jammed, with the result that the actuating mechanism is unable to attain a predetermined action. Such an actuating mechanism can only diagnose valve symptoms which have already occurred, not potential faults of the valve.

### Content of the invention

An object of the present invention is to solve the abovementioned and/or other technical problems and provide an actuating mechanism of a control valve of a valve control system, capable of sending, to a control center, data of a driving force applied to a valve rod by an actuating mechanism, in order to diagnose a potential valve fault.

Another object of the present invention is to provide a control valve of a valve control system, capable of sending, to a control center, data of a driving force applied to a valve rod by an actuating mechanism, in order to diagnose a potential valve fault.

Another object of the present invention is to provide a valve control system, capable of diagnosing a potential valve fault by means of data of a driving force applied to a valve rod by an actuating mechanism.

The present invention provides an actuating mechanism of a control valve of a valve control system, the valve control system comprising a control center, the control center being capable of sending a control signal, the control center also being capable of receiving a diagnostic signal and subjecting the diagnostic signal to analytical diagnosis, the control valve comprising a valve, the valve comprising a valve rod, and the actuating mechanism comprising a drive unit, a sensor unit, a data processing unit and a communication control unit. The drive unit is capable of receiving the control signal and, on the basis of the control signal, driving the valve rod to move in an axial direction of the valve rod or rotate in the axial direction of the valve rod. The sensor unit is disposed at the drive unit, the sensor unit being capable of detecting a driving force applied to the valve rod when the drive unit drives the valve rod to move, and generating a driving force signal containing driving force data.

In general, a driving force signal is considered to be same as an initial diagnostic signal.

The data processing unit is capable of receiving the driving force signal and subjecting the driving force signal to signal conditioning, and then generating the diagnostic signal. The communication control unit is capable of receiving the control signal sent by the control center and sending the control signal to the drive unit, the communication control unit also being capable of receiving the diagnostic signal and sending the diagnostic signal to the control center.

With the actuating mechanism of the present invention, the sensor unit disposed at the drive unit detects the driving force applied to the valve rod when the drive unit drives the valve rod to move, then a signal conditioning unit receives and subjects to signal conditioning the data sent by the sensor unit and generates digital data that can be used for transmission, which is then sent by the communication control unit to the control center, such that the control center can diagnose data of the driving force on the valve rod during valve action in order to pre-diagnose a potential valve fault which develops due to damage.

In another schematic embodiment of the actuating mechanism, the drive unit comprises an electric machine, a gear and a drive rod. The gear is disposed at the electric machine and capable of rotating under a driving action of the electric machine. The drive rod has a radially extending rack, the rack being meshed with the gear. The sensor unit is a pressure sensor, disposed at an end of the drive rod, the drive rod being capable of abutting the sensor unit and pushing the valve rod to move in the axial direction of the valve rod.

In another schematic embodiment of the actuating mechanism, the sensor unit is a piezoresistor or a piezoelectric ceramic plate.

In another schematic embodiment of the actuating mechanism, the actuating mechanism comprises a drive unit comprising an electric machine, a first bevel gear and a drive rod. The first bevel gear is disposed at the electric machine and capable of rotating under a driving action of the electric machine. The drive rod has a second bevel gear, the second bevel gear being meshed with the first bevel gear. The sensor unit is a torque sensor, disposed at an end of the drive rod, the drive rod being capable of driving the valve rod to move in the axial direction of the valve rod by means of the torque sensor.

In another schematic embodiment of the actuating mechanism, the actuating mechanism further comprises an Internet of Things communication module, capable of receiving the diagnostic signal and sending the diagnostic signal to an Internet of Things server.

In another schematic embodiment of the actuating mechanism, the data processing unit comprises a signal conditioning circuit and an analog-to-digital conversion circuit. The signal conditioning circuit is capable of receiving the driving force signal and conditioning the driving force signal to form a standard analog signal capable of undergoing analog-to-digital conversion. The analog-to-digital conversion circuit is capable of receiving the standard analog signal and performing analog-to-digital conversion, to generate the diagnostic signal.

The present invention also provides a control valve of a valve control system, the valve control system comprising a control center, the control center being capable of sending a control signal, the control center also being capable of receiving a diagnostic signal and subjecting the diagnostic signal to analytical diagnosis, the control valve comprising a valve and an actuating mechanism as described above. The valve comprises a valve rod. The drive unit is capable of receiving the control signal and, on the basis of the control signal, driving the valve rod to move in the axial direction of the valve rod or rotate in the axial direction of the valve rod, and the sensor unit being capable of detecting a driving force applied to the valve rod when the drive unit drives the valve rod to move, and generating a driving force signal.

In another schematic embodiment of a control valve, the valve further comprises an external sensor. The actuating mechanism further comprises an external sensor interface, capable of receiving the driving force signal sent by the external sensor and sending the driving force signal to the data processing unit.

The present invention also provides a valve control system, comprising a control center and a control valve as described above. The control center is capable of sending a control signal, the control center also being capable of receiving a diagnostic signal and subjecting the diagnostic signal to analytical diagnosis. The communication control unit is capable of receiving the control signal sent by the control center and sending the control signal to the drive unit, the communication control unit also being capable of receiving the diagnostic signal and sending the diagnostic signal to the control center.

Preferred embodiments are explained below in a clear and easily comprehensible manner, with reference to the accompanying drawings, to provide further illustration of the abovementioned characteristics, technical features and advantages of the actuating mechanism of the control valve of the valve control system, the control valve and the valve control system and the control valve, and embodiments thereof.

### Description of the accompanying drawings

The accompanying drawings below merely illustrate and explain the present invention schematically, without limiting the scope thereof.
Fig. 1 is a structural schematic diagram intended to illustrate a schematic embodiment of an actuating mechanism of a control valve.
Fig. 2 is a structural schematic diagram intended to illustrate another schematic embodiment of an actuating mechanism of a control valve.
Fig. 3 is a structural schematic diagram intended to illustrate another schematic embodiment of an actuating mechanism of a control valve.

### Key to labels

- 10: drive unit
- 12: electric machine
- 14: gear
- 16: drive rod
- 17: rack
- 18: first bevel gear
- 19: second bevel gear
- 20: sensor unit
- 30: data processing unit
- 32: signal conditioning circuit
- 34: analog-to-digital conversion circuit
- 40: communication control unit
- 50: external sensor interface
- 60: Internet of Things communication module
- 70: valve
- 72: valve rod
- 74: external sensor
- 80: control center
- 90: Internet of Things server
- S1: control signal
- S2: driving force signal
- S21: standard analog signal
- S3: diagnostic signal

### Particular embodiments

To enable clearer understanding of the technical features, objectives and effects of the invention, particular embodiments of the present invention are now explained with reference to the accompanying drawings, in which identical labels indicate structurally identical components or components with similar structures but identical functions.

As used herein, "schematic" means "serving as an instance, example or illustration". No drawing or embodiment described herein as "schematic" should be interpreted as a more preferred or more advantageous technical solution.

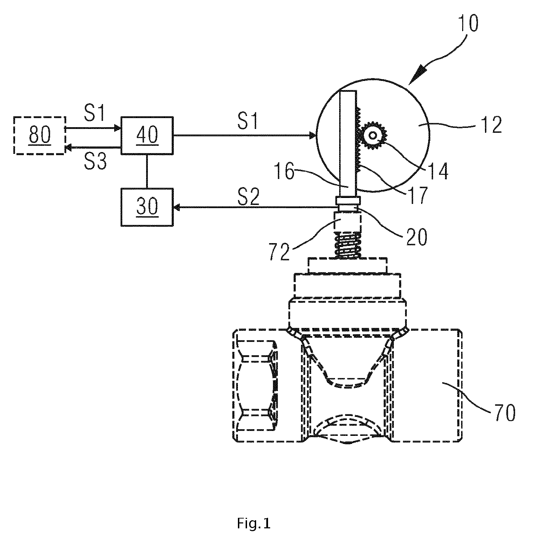

Fig. 1 is a structural schematic diagram intended to illustrate a schematic embodiment of an actuating mechanism of a control valve; referring to fig. 1, a valve control system comprises a control center 80, wherein the control center 80 can send a control signal S1, and the control center 80 can also receive a diagnostic signal S3 and subject the diagnostic signal to analytical diagnosis. The control valve comprises a valve 70 comprising a valve rod 72; the valve rod 72 can move linearly in an axial direction or rotate in an axial direction to open/close or adjust the valve. The actuating mechanism comprises a drive unit 10, a sensor unit 20, a data processing unit 30 and a communication control unit 40. The drive unit 10 can receive the control signal S1 and, on the basis of the control signal S1, drive the valve rod 72 to move in an axial direction of the valve rod 72 or rotate in the axial direction of the valve rod 72. In a schematic embodiment, the drive unit 10 comprises an electric machine and a gear set, but of course is not limited to this; in other schematic embodiments, the drive unit 10 may also have an electromagnet and an electromagnetic coil, or another drive structure such as a pneumatic pump. The sensor unit 20 is disposed at the drive unit 10; the sensor unit 20 can detect a driving force applied to the valve rod 72 when the drive unit 10 drives the valve rod 72 to move, and generate a driving force signal S2 containing driving force data. The data processing unit 30 can receive the driving force signal S2 and subject the driving force signal S2 to signal conditioning, and then generate the diagnostic signal S3. The communication control unit 40 can receive the control signal S1 sent by the control center 80 and send the control signal S1 to the drive unit 10; the communication control unit 40 can also receive the diagnostic signal S3 and send the diagnostic signal S3 to the control center 80.

With the actuating mechanism of the present invention, the sensor unit 20 disposed at the drive unit 10 detects the driving force applied to the valve rod 72 when the drive unit 10 drives the valve rod 72 to move, then the signal conditioning unit 30 receives and subjects to signal conditioning the data sent by the sensor unit 20 and generates digital data that can be used for transmission, which is then sent by the communication control unit 40 to the control center 80, such that the control center 80 can diagnose data of the driving force on the valve rod during valve action in order to pre-diagnose a situation where valve rod movement is not smooth due to valve damage, and can discover potential valve faults in advance.

In a schematic embodiment, referring to fig. 1, the drive unit 10 comprises an electric machine 12, a gear 14 and a drive rod 16. The gear 14 is disposed at the electric machine 12 and can rotate under a driving action of the electric machine 12. The drive rod 16 has a radially extending rack 17; the rack 17 and the gear 14 can mesh to transmit motion, and rotation of the electric machine can drive the drive rod 16 to move linearly in an axial direction thereof. The sensor unit 20 is a pressure sensor, disposed at an end of the drive rod 16; the drive rod 16 can abut the sensor unit 20 and push the valve rod 72 to move in the axial direction of the valve rod 72. In a schematic embodiment, the sensor unit 20 is a piezoresistor or a piezoelectric ceramic plate. The sensor unit 20 can generate a driving force signal S2 representing the driving force by detecting pressure in the process of the drive rod 16 abutting the sensor unit 20 and pushing the valve rod 72 to move in the axial direction of the valve rod 72.

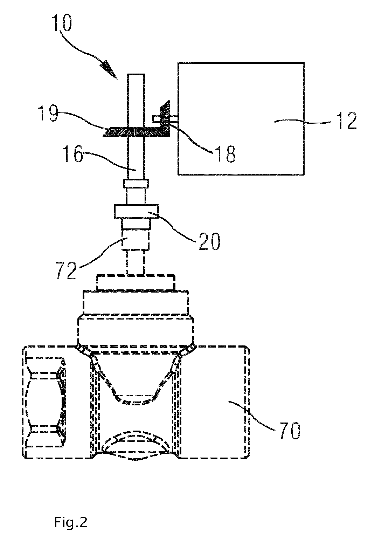

Fig. 2 is a structural schematic diagram intended to illustrate another schematic embodiment of an actuating mechanism of a control valve; referring to fig. 2, an actuating mechanism comprises a drive unit 10 comprising an electric machine 12, a first bevel gear 18 and a drive rod 16. The first bevel gear 18 is disposed at the electric machine 12 and can rotate under a driving action of the electric machine 12. The drive rod 16 has a second bevel gear 19; the second bevel gear 19 and the first bevel gear 18 can mesh to transmit motion. A sensor unit 20 is a torque sensor, disposed at an end of a drive rod 16; the drive rod 16 can drive a valve rod 72 to move in an axial direction of the valve rod 72 by means of the torque sensor. The sensor unit 20 can generate a driving force signal S2 containing a driving force by detecting torque in the process of the drive rod 16 driving the valve rod 72 to move in the axial direction of the valve rod 72 by means of the torque sensor.

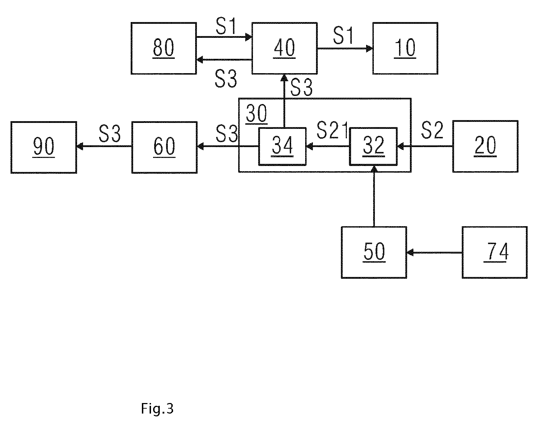

Fig. 3 is a structural schematic diagram intended to illustrate another schematic embodiment of an actuating mechanism of a control valve; referring to fig. 3, the actuating mechanism further comprises an IoT (Internet of Things) communication module 60, capable of receiving a diagnostic signal S3 and sending the diagnostic signal S3 to an IoT server 90; the IoT server 90 enables faster and more precise diagnosis of the valve.

In a schematic embodiment, referring to fig. 3, a data processing unit 30 comprises a signal conditioning circuit 32 and an analog-to-digital conversion circuit 34. The signal conditioning circuit 32 can receive a driving force signal S2 and, through operations such as signal amplification and filtering, condition the driving force signal S2 to form a standard analog signal S21 capable of undergoing analog-to-digital conversion. The analog-to-digital conversion circuit 34 can receive the standard analog signal S21 and perform analog-to-digital conversion, to generate a diagnostic signal S3.

The present invention also provides a control valve of a valve control system. Referring to fig. 3, the control valve of the valve control system comprises a control center 80; the control center 80 can send a control signal S1, and the control center 80 can also receive a diagnostic signal S3 and subject the diagnostic signal S3 to analytical diagnosis; the control valve comprises a valve 70 and an actuating mechanism as described above. The valve 70 comprises a valve rod 72. The drive unit 10 can receive the control signal S1 and, on the basis of the control signal S1, drive the valve rod 72 to move in the axial direction of the valve rod 72 or rotate in the axial direction of the valve rod 72; the sensor unit 20 can detect a driving force applied to the valve rod 72 when the drive unit 10 drives the valve rod 72 to move, and generate a driving force signal S2. In a schematic embodiment, the valve 70 further comprises an external sensor 74. The actuating mechanism further comprises an external sensor interface 50, capable of receiving a driving force signal S2 sent by the external sensor 74 and sending the driving force signal S2 to the data processing unit 30.

The present invention also provides a valve control system; referring to fig. 3, the valve control system comprises a control center 80 and a control valve as described above. The control center 80 can send a control signal S1, and the control center 80 can also receive a diagnostic signal S3 and subject the diagnostic signal S3 to analytical diagnosis. A communication control unit 40 can receive the control signal S1 sent by the control center 80 and send the control signal S1 to the drive unit 10; the communication control unit 40 can also receive the diagnostic signal S3 and send the diagnostic signal S3 to the control center 80.

The present invention also provides a control valve, comprising an actuating mechanism as described above.

It should be understood that although the description herein is based on various embodiments, it is by no means the case that each embodiment contains just one independent technical solution. Such a method of presentation is adopted herein purely for the sake of clarity. Those skilled in the art should consider the description in its entirety. The technical solutions in the various embodiments could also be suitably combined to form other embodiments capable of being understood by those skilled in the art.

The series of detailed explanations set out above are merely particular explanations of feasible embodiments of the present invention, which are not intended to limit the scope of protection thereof. All equivalent embodiments or changes made without departing from the artistic spirit of the present invention, such as combinations, divisions or repetitions of features, shall be included in the scope of protection of the present invention.

## Claims

1. An actuating mechanism of a control valve of a valve control system, the valve control system comprising a control center (80), the control center (80) being capable of sending a control signal (S1), the control center (80) also being capable of receiving a diagnostic signal (S3) and subjecting the diagnostic signal (S3) to analytical diagnosis, the control valve comprising a valve (70), the valve (70) comprising a valve rod (72), wherein the actuating mechanism comprises:
- a drive unit (10), capable of receiving the control signal (S1) and, on the basis of the control signal (S1), driving the valve rod (72) to move in an axial direction of the valve rod (72) or rotate in the axial direction of the valve rod (72) ;
- a sensor unit (20), disposed at the drive unit (10), the sensor unit (20) being capable of detecting a driving force applied to the valve rod (72) when the drive unit (10) drives the valve rod (72) to move, and generating a driving force signal (S2) containing driving force data;
- a data processing unit (30), capable of receiving the driving force signal (S2) and subjecting the driving force signal (S2) to signal conditioning, and then generating the diagnostic signal (S3);
- a communication control unit (40), capable of receiving the control signal (S1) sent by the control center (80) and sending the control signal (S1) to the drive unit (10), the communication control unit (40) also being capable of receiving the diagnostic signal (S3) and sending the diagnostic signal (S3) to the control center (80).

2. The actuating mechanism as claimed in claim 1, wherein the drive unit (10) comprises:
- an electric machine (12);
- a gear (14), disposed at the electric machine (12) and capable of rotating under a driving action of the electric machine (12); and
- a drive rod (16), having a radially extending rack (17), the rack (17) being meshed with the gear (14);
- the sensor unit (20) being a pressure sensor, disposed at an end of the drive rod (16), the drive rod (16) being capable of abutting the sensor unit (20) and pushing the valve rod (72) to move in the axial direction of the valve rod (72).

3. The actuating mechanism as claimed in claim 2, wherein the sensor unit (20) is a piezoresistor or a piezoelectric ceramic plate.

4. The actuating mechanism as claimed in claim 1, wherein the actuating mechanism comprises a drive unit (10) comprising:
- an electric machine (12);
- a first bevel gear (18), disposed at the electric machine (12) and capable of rotating under a driving action of the electric machine (12);
- a drive rod (16), having a second bevel gear (19), the second bevel gear (19) being meshed with the first bevel gear (18);
- the sensor unit (20) being a torque sensor, disposed at an end of the drive rod (16), the drive rod (16) being capable of driving the valve rod (72) to move in the axial direction of the valve rod (72) by means of the torque sensor.

5. The actuating mechanism as claimed in claim 1, wherein the actuating mechanism further comprises an Internet of Things communication module (60), capable of receiving the diagnostic signal (S3) and sending the diagnostic signal to an Internet of Things server (90).

6. The actuating mechanism as claimed in claim 1, wherein the data processing unit (30) comprises:
- a signal conditioning circuit (32), capable of receiving the driving force signal (S2) and conditioning the driving force signal (S2) to form a standard analog signal (S21) capable of undergoing analog-to-digital conversion; and
- an analog-to-digital conversion circuit (34), capable of receiving the standard analog signal (S21) and performing analog-to-digital conversion, to generate the diagnostic signal (S3).

7. A control valve of a valve control system, the valve control system comprising a control center (80), the control center (80) being capable of sending a control signal (S1), the control center (80) also being capable of receiving a diagnostic signal (S3) and subjecting the diagnostic signal to analytical diagnosis, wherein the control valve comprises:
- a valve (70), the valve (70) comprising a valve rod (72); and
- an actuating mechanism as claimed in any one of claims 1 to 6, the drive unit (10) being capable of receiving the control signal (S1) and, on the basis of the control signal (S1), driving the valve rod (72) to move in the axial direction of the valve rod (72) or rotate in the axial direction of the valve rod (72), and the sensor unit (20) being capable of detecting a driving force applied to the valve rod (72) when the drive unit (10) drives the valve rod (72) to move, and generating a driving force signal (S2).

8. The control valve as claimed in claim 7, wherein
- the valve (70) further comprises an external sensor (74);
- the actuating mechanism further comprises an external sensor interface (50), capable of receiving the driving force signal (S2) sent by the external sensor (74) and sending the driving force signal (S2) to the data processing unit (30).

9. A valve control system, wherein the valve control system comprises:
- a control center (80), capable of sending a control signal (S1), the control center (80) also being capable of receiving a diagnostic signal (S3) and subjecting the diagnostic signal (S3) to analytical diagnosis; and
- a control valve as claimed in either one of claims 7 and 8, the communication control unit (40) being capable of receiving the control signal (S1) sent by the control center (80) and sending the control signal (S1) to the drive unit (10), and the communication control unit (40) also being capable of receiving the diagnostic signal (S3) and sending the diagnostic signal (S3) to the control center (80).
